# DEMANDE DE BREVET EUROPEEN

(11) **EP 4 810 896 A1**
(43) Date de publication de la demande: **23.09.2026**
(21) Numéro de dépôt: 26165274.7
(22) Date de dépôt: 17.03.2026
(51) Int. Cl.: F42B 15/36, F42B 15/38, B64G 1/64

(54) **SYSTÈME POUR LA SÉPARATION DE DEUX SOUS-ENSEMBLES MÉCANIQUES**

(30) Priorité: 17.03.2025 FR 2502589
(71) Demandeur: Etienne Lacroix Tous Artifices S.A., 31600 Muret (FR)
(72) Inventeur: SECCO, Thierry, 09700 Saverdun (FR); SAP, Pierre, 31170 Tournefeuille (FR)
(74) Mandataire: Regimbeau

(57) **Abrégé**

Système pour la séparation de deux sous-ensembles mécaniques, comportant :
- une première couronne (1),
- une deuxième couronne (2),
- au moins trois brides (3) articulées sur la deuxième couronne, la première couronne (1) comportant au moins un rebord intérieur,
chaque bride (3) articulée étant apte à basculer entre une position de verrouillage sur le rebord intérieur de la première couronne (1) et une position déverrouillée où elle est dégagée par rapport audit rebord, au moins un ressort exerçant un effort tendant à rappeler ladite bride dans sa position déverrouillée,
- un câble (5) reliant les différentes brides (3) dans leur position de verrouillage,
- un actionneur (8) adapté pour sectionner ledit câble.

## Description

### Domaine technique général et art antérieur

L'invention concerne un système pour la séparation de deux sous-ensembles mécaniques.

Elle trouve notamment avantageusement application dans le domaine des fusées ou lanceurs par exemple pour la séparation de différents effecteurs opérés par un propulseur, la séparation de deux étages d'un propulseur, la séparation d'une charge utile et d'une structure porteuse, la séparation de différents étages de charge utile, la séparation entre un satellite et son lanceur, etc.

On connait déjà des systèmes pour la séparation de sous-ensembles mécaniques, qui comportent plusieurs brides de maintien et des câbles qui les relient ensemble et les maintiennent dans une position de verrouillage.

Des actionneurs, par exemple à couteau thermique, sont prévus pour sectionner les câbles et libérer les brides, afin de permettre la séparation des sous-ensembles mécaniques.

Un exemple en ce sens est par exemple proposé dans la demande de brevet EP 4 480 833.

Dans les solutions décrites dans ce document, l'espace libre au centre de la structure est limité, ce qui ne permet pas une bonne intégration dans les systèmes pour lesquels l'encombrement est un critère majeur (applications spatiales notamment).

On souhaite par ailleurs pouvoir réduire le nombre de pièces composant ces systèmes de séparation afin d'en limiter la masse.

En outre, certaines applications exigent une parfaite synchronisation des actions de séparation des sous-ensembles mécaniques. Typiquement, dans le cas de systèmes à brides, les mouvements de celles-ci doivent être parfaitement synchrones pour permettre une séparation sans perturbation de la cinématique attendue pour les deux sous-ensembles.

Également, il est important que la séparation n'engendre pas de débris ou de projection.

Par ailleurs, le niveau de choc attendu lors de la séparation doit être faible pour préserver l'intégrité des sous-ensembles à séparer.

De ce fait, les solutions usuelles telles que celles à boulons pyrotechniques ou celles à cordeaux détonants sont dans ce contexte proscrites.

On souhaite également pouvoir disposer de systèmes permettant d'économiser l'énergie dépensée pour la séparation des sous-ensembles : les systèmes à couteau thermique sont en effet très consommateur en énergie.

### Présentation générale de l'invention

Un but général de l'invention est de proposer une solution qui ne présente pas les inconvénients des techniques de l'état de la technique.

Notamment selon un aspect, l'invention propose un système pour la séparation de deux sous-ensembles mécaniques, comportant :
- une première couronne solidaire de l'un des sous-ensembles mécaniques ou intégrée à celui-ci,
- une deuxième couronne solidaire de l'autre des sous-ensembles mécaniques ou intégrée à celui-ci,
- au moins trois brides articulées sur la deuxième couronne en étant réparties autour de celle-ci, la première couronne comportant au moins un rebord intérieur pour l'accrochage desdites brides, les brides comportant chacune un crochet adapté pour le verrouillage sur le rebord intérieur de la première couronne,
   chaque bride articulée étant apte à basculer entre une position de verrouillage où elle est verrouillée sur le rebord intérieur de la première couronne et une position déverrouillée où elle est dégagée par rapport audit rebord, au moins un ressort exerçant un effort tendant à rappeler ladite bride dans sa position déverrouillée,
- un câble engagé sur les différentes brides à leur extrémité opposée à leur crochet, ledit câble faisant le tour extérieur de l'ensemble des brides et laissant libre l'espace entre les brides, ledit câble exerçant, lorsqu'il est en tension, un effort d'appui sur les brides tendant à s'opposer à l'effort de rappel du ou des ressorts et maintenant ainsi lesdites brides dans leur position de verrouillage,
- un actionneur configuré et disposé pour sectionner ledit câble.,

Cette solution a la particularité de ne pas présenter d'éléments au centre de la structure : l'espace libre au centre au centre de la structure est alors à disposition pour d'autres éléments ou fonction de l'engin qui intègre ce système de séparation.

Cette absence d'encombrement au centre du système de séparation est un avantage important, dans la mesure où il facilite l'intégration de ce système dans des assemblages de sous-ensembles mécaniques pour lesquels l'encombrement est un critère majeur (application spatiale notamment).

En outre, le fait que les brides soient libérées par le sectionnement d'un câble qui les relie, assure la synchronisation de leur mouvement (elles sont nécessairement libérées en même temps) et permet d'éviter de perturber la cinématique des sous-ensembles mécaniques que l'on sépare.

Le système proposé a en outre l'avantage de permettre une répartition des efforts de maintien dans plusieurs directions autour de l'axe de l'engin.

Il est d'une structure simple, d'un nombre de pièces limité et d'une masse optimisée.

Par ailleurs, cette structure, en combinaison avec l'utilisation d'un actionneur pyrotechnique (à chambre de combustion et piston, permet de garantir l'absence de débris, ce qui est également un critère majeur pour les applications spatiales.

Également, l'utilisation d'un actionneur pyrotechnique pour le sectionnement du câble présente l'avantage de limiter les chocs lors de la découpe, notamment par rapport aux solutions à boulons explosifs.

La coupe par l'actionneur pyrotechnique présente en outre l'avantage d'être quasi instantanée. Cette rapidité de découpe contribue à la bonne maitrise de la séparation.

L'énergie dépensée par un actionneur pyrotechnique a en outre l'avantage d'être beaucoup plus faible que dans le cas d'un sectionnement par un couteau thermique.

Un tel système est avantageusement complété par les différentes caractéristiques suivantes prises seules ou en combinaison :
- les brides peuvent comporter chacune, à leur extrémité opposée à leur crochet, une encoche extérieure de maintien qui est ouverte vers l'extérieur et dans laquelle s'engage le câble qui entoure extérieurement les différentes brides pour les maintenir en position verrouillée ;
- la répartition des brides est telle que l'effort de retenue qu'elles exercent est similaire dans les deux directions de l'axe central ;
- les brides sont articulées sur des pattes qui sont en saillie intérieure par rapport à la deuxième couronne ;
- chaque bride est montée sur un axe de rotation qui traverse une patte et qui permet le basculement de ladite bride entre une position où son crochet est refermé sur le rebord intérieur de la première couronne et une position basculée où ledit crochet est dégagé par rapport à la première couronne et audit rebord ;
- la première couronne comprend une face d'appui inclinée par rapport au plan médian général de ladite couronne ;
- le système comporte un tendeur de câble.

L'invention concerne également un ensemble comportant deux sous-ensembles mécaniques et un système de séparation du type précité, dans lequel ledit système est un système du type précité dont une première couronne est solidaire de l'un des sous-ensembles mécaniques ou intégrée à celui-ci et dont une deuxième couronne est solidaire de l'autre des sous-ensembles mécaniques ou intégrée à celui-ci.

L'un des deux sous-ensembles comporte une charge utile, l'autre comportant des moyens de propulsion.

En variante, les deux sous-ensembles peuvent être des étages de propulsion.

Les deux sous-ensembles peuvent également être l'un et l'autre des charges utiles.

### Brève description des dessins

D'autres caractéristiques et avantages de l'invention ressortiront encore de la description qui suit, laquelle est purement illustrative et non limitative, et doit être lue en regard des figures annexées sur lesquelles :

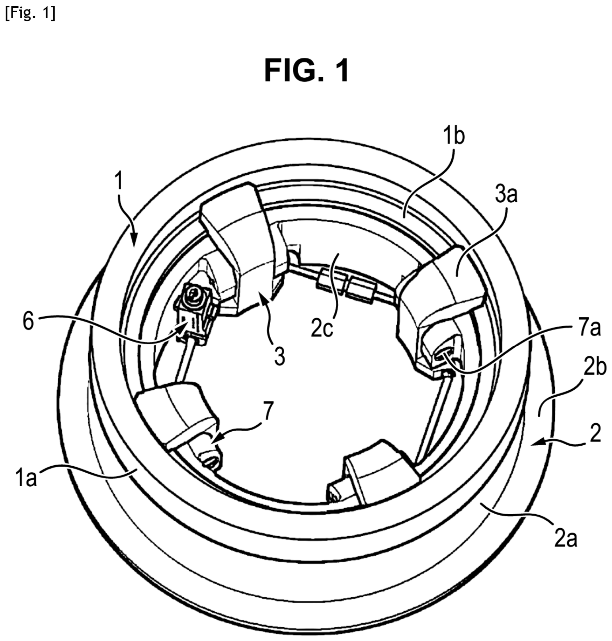

- la figure 1 est une représentation en perspective d'un système conforme à un mode de réalisation possible de l'invention ;

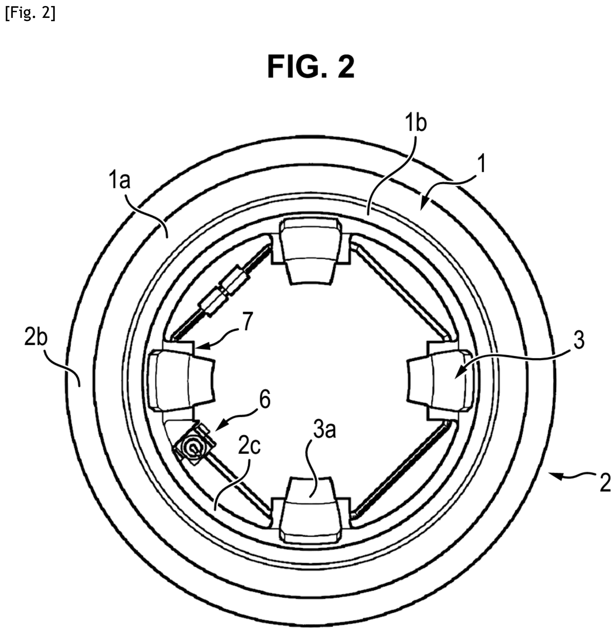

- la figure 2 est une vue de dessus du système de la figure 1 ;
- la figure 3a et la figure 3b représentent le système des figures 1 et 2 respectivement en position verrouillée et en position déverrouillée des crochets.

### Description d'un ou plusieurs modes de mise en œuvre et de réalisation

Le système de séparation illustré sur les figures comporte deux couronnes 1 et 2 solidaires ou intégrées à deux sous-ensembles mécaniques à désolidariser (non représentés).

Ces deux sous-ensembles mécaniques sont par exemple l'un (celui solidaire de la couronne 1 ou auquel ladite couronne 1 est intégrée) un sous-ensemble comportant une charge utile, l'autre (celui solidaire de la couronne 2 ou auquel ladite couronne 2 est intégrée) un sous-ensemble comportant des moyens de propulsion.

En position verrouillée, les deux couronnes 1 et 2 sont coaxiales et rapportées l'une sur l'autre.

La couronne 1 comporte un corps cylindrique 1a et un rebord annulaire intérieur 1b qui borde le pied dudit corps cylindrique 1a et assure avec ledit pied, la mise en appui de la couronne 1 sur la couronne 2. Ce rebord 1b permet le verrouillage de la couronne 2 sur la couronne 1 par au moins trois brides 3, typiquement quatre. Le corps 1a peut se prolonger au-delà de ce qui est représenté sur les figures pour définir le fuselage d'un nez d'ogive recevant la charge utile. En variante, il peut comporter des moyens (non représentés) par lequel il est accroché à une autre pièce qui elle-même porte la charge utile.

Dans l'exemple illustré sur les figures, la couronne 2 comporte un flasque 2a destiné à fermer le sous-ensemble mécanique dont il est solidaire. En sa partie la plus large, le flasque 2a est bordé par un rebord annulaire externe 2b pour la fixation de ladite couronne 2 sur ledit sous-ensemble. A son extrémité opposée, il comporte un rebord interne 2b annulaire qui reçoit en appui la couronne 1 et le rebord intérieur 1b.

Les couronnes 1 et 2 sont en des matériaux typiques pour les applications lanceurs ou fusée : alliages haute température, matériaux composites, etc.

Les brides 3 comportent chacune un crochet 3a et une partie pied 3b opposée. Elles sont articulées sur la couronne 2 et sont réparties autour de celle-ci en étant distribuées de façon régulière autour des deux sous-ensembles 1 et 2. Notamment, elles sont réparties en étant espacées deux à deux d'un angle constant (120°dans le cas de trois brides ; 90° dans le cas de quatre brides ; etc.).

Une telle configuration permet la répartition des efforts dans différentes directions. La répartition des brides est en effet telle que l'effort de retenue qu'elles exercent est similaire dans les deux directions de l'axe central (axe des couronnes 1 et 2, qui est également l'axe principal de l'engin qui intègre le système de séparation).

Plus précisément, elles sont articulées sur des pattes 7 qui sont en saillie intérieure par rapport à la couronne 2. Chaque bride 3 est à cet effet montée sur un axe de rotation 7a qui traverse une patte 7 et qui permet le basculement de ladite bride 3 entre une position où son crochet 3a est refermé sur le rebord 1b et une position basculée où ledit crochet 3a est dégagé par rapport à la couronne 1 et au rebord 1b.

Les brides 3 sont massives. La surface d'appui de leurs crochets 3a et leur section de traction sont dimensionnées pour assurer les reprises d'effort nécessaires à l'environnement des sous-ensembles mécaniques. Les axes de rotations 7a sont conçus pour résister au cisaillement.

La surface d'appui du rebord 1b est inclinée par rapport au plan général médian de la couronne 1, pour permettre une libération simplifiée et une reprise des jeux mécaniques.

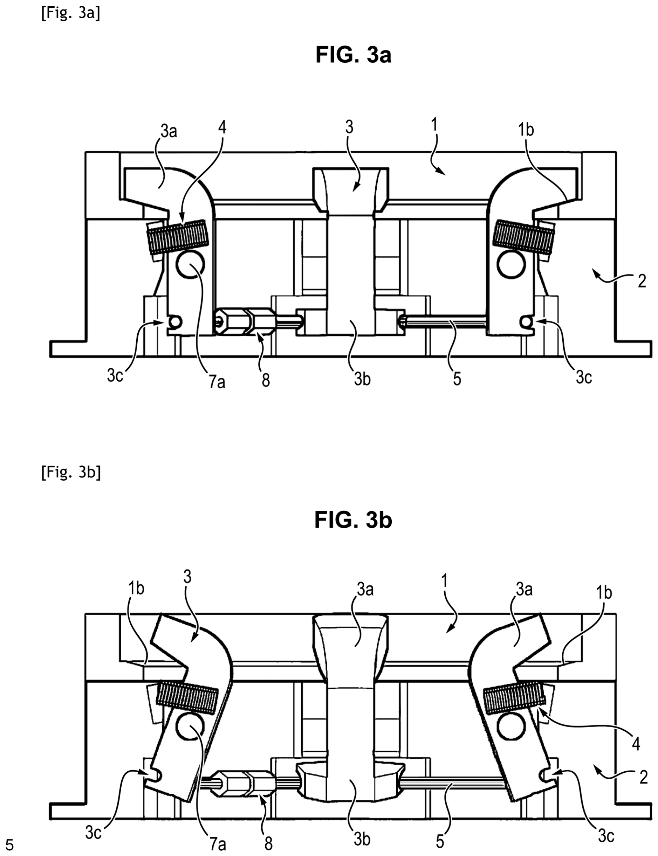

Comme l'illustrent plus particulièrement les figures 3a et 3b, des ressorts 4 montés entre la couronne 2 et les brides 3 exercent un effort tendant à rappeler les brides 3 dans leurs positions basculées dans lesquelles les crochets 3a sont dégagés par rapport au rebord 1b.

Au niveau de leurs pieds 3b opposés aux crochets 3a, les brides 3 comportent des encoches de maintien 3c dans lesquelles s'engage un câble unique 5.

Ces encoches de maintien 3c sont disposées et ouvertes du côté des brides 3 opposé à l'axe principal du système de fixation.

Lorsqu'il est en place, ce câble 5 est engagé dans ces encoches 3c. Il fait alors le tour extérieur de l'ensemble des brides 3 les brides 3, qu'il relie entre elles en même temps qu'il laisse libre l'espace entre les brides. Il s'oppose à l'effort des ressorts 4 et au basculement des brides 3 sous l'effet de ceux-ci. Il maintient ainsi les brides 3 verrouillées sur la couronne 1, les différents crochets 3a étant engagés sur le rebord 1b.

Le câble est maintenu en tension à l'aide d'un tendeur 8 de câble. Ce tendeur 8 est par exemple un système à vis. Lors du montage des deux sous-ensembles mécaniques l'un sur l'autre via les couronnes 1 et 2, il est tourné par l'intérieur du sous-ensemble mécanique relié à la couronne 2, qui par ailleurs est facilement accessible. La rotation ainsi réalisée met le câble 5 en tension et referme les brides 3 sur le rebord 1b.

Au moins un actionneur pyrotechnique coupe-câble 6 est disposé en au moins un point du câble 5 et est dimensionné pour sectionner celui-ci lorsqu'une commande en ce sens est déclenchée. Les actionneurs coupe-câble sont classiquement connus pour permettre des sectionnements sans dommage.

De tels actionneurs sont des actionneurs pyrotechniques. On rappelle que les actionneurs pyrotechniques sont des systèmes coulissants à chambre de combustion et piston dans un boîtier.

Ces actionneurs ont l'avantage de permettre une grande rapidité d'exécution (de l'ordre de la ms), tout en ne demandant qu'une infime quantité d'énergie.

Lorsque l'actionneur coupe-câble 6 est déclenché, il entraîne le relâchement du câble 5. Les brides 3 pivotent autour de leurs axes de rotation 7a sous l'action des ressorts de rappel 4. Les crochets 3a s'écartent du rebord 1b en étant basculés à l'intérieur de la couronne 2, vers l'axe de celle-ci. Elles ne maintiennent alors plus la première couronne 1 sur la seconde couronne 2, entraînant ainsi une désolidarisation immédiate des couronnes 1 et 2 et la séparation synchrone en tout point entre les deux sous-ensembles mécaniques initialement verrouillés l'un sur l'autre par les deux couronnes 1 et 2 et les brides 3.

En particulier, les brides 3 - initialement retenues par le câble - sont toutes basculées au même moment dans leur position déverrouillée, lorsque le câble est sectionné.

Le niveau de choc attendu lors de la séparation est faible, ce qui permet de préserver l'intégrité des sous-ensembles mécaniques à séparer.

Un tel système de séparation a en outre pour avantage de n'engendrer ni débris, ni projection, car les composants permettant la séparation ont tous une trajectoire maîtrisée.

Le système proposé a en outre la particularité de ne pas présenter d'éléments au centre de la structure, et ce que ce soit en position fermée ou en position ouverte.

L'espace libre interne au centre de la structure peut être exploité, par exemple pour le passage d'outil ou la propulsion. La surface externe autour des deux couronnes est totalement libre.

La configuration proposée pour le système est simple et d'une faible masse. Elle permet une répartition des efforts tout autour du système et permet en outre de résister à des efforts importants.

On notera que la couronne 2 qui porte les pattes 7, les brides 3, le câble 5, l'actionneur 6 et le tendeur 8 (partie la plus massive du système de séparation) est solidaire du sous-ensemble mécanique « non utile » (ou intégrée à celui-ci), ce qui permet également d'optimiser la masse de la couronne 1 solidaire du sous-ensemble dit « utile », tout en dégageant par exemple la zone nécessaire à sa propulsion.

## Revendications

1. Système à actionneur pour la séparation de deux sous-ensembles mécaniques, comportant :
- une première couronne (1) solidaire de l'un des sous-ensembles mécaniques ou intégrée à celui-ci,
- une deuxième couronne (2) solidaire de l'autre des sous-ensembles mécaniques ou intégrée à celui-ci,
- au moins trois brides (3) articulées sur la deuxième couronne en étant réparties autour de celle-ci, la première couronne (1) comportant au moins un rebord intérieur pour l'accrochage desdites brides (3), les brides (3) comportant chacune un crochet (3a) adapté pour le verrouillage sur le rebord intérieur de la première couronne,
chaque bride (3) articulée étant apte à basculer entre une position de verrouillage où elle est verrouillée sur le rebord intérieur de la première couronne (1) et une position déverrouillée où elle est dégagée par rapport audit rebord, au moins un ressort exerçant un effort tendant à rappeler ladite bride dans sa position déverrouillée,
- un câble (5) engagé sur les différentes brides (3) à leur extrémité opposée à leur crochet, ledit câble faisant le tour extérieur de l'ensemble des brides et laissant libre l'espace entre les brides, ledit câble exerçant, lorsqu'il est en tension, un effort d'appui sur les brides tendant à s'opposer à l'effort de rappel du ou des ressorts et maintenant ainsi lesdites brides dans leur position de verrouillage,
- un actionneur (8) configuré et disposé pour sectionner ledit câble.

2. Système selon la revendication 1, dans lequel les brides comportent chacune, à leur extrémité opposée à leur crochet, une encoche extérieure de maintien (3c) qui est ouverte vers l'extérieur et dans laquelle s'engage le câble qui entoure les différentes brides (3).

3. Système selon la revendication 1, dans lequel l'actionneur est un actionneur pyrotechnique à chambre de combustion et piston.

4. Système selon l'une des revendications précédentes, dans lequel la répartition des brides (3) est telle que l'effort de retenue qu'elles exercent est similaire dans les deux directions de l'axe central.

5. Système selon l'une des revendications précédentes, dans lequel les brides (3) sont articulées sur des pattes (7) qui sont en saillie intérieure par rapport à la deuxième couronne (2).

6. Système selon la revendication 5, dans lequel chaque bride (3) est montée sur un axe de rotation (7a) qui traverse une patte (7) et qui permet le basculement de ladite bride (3) entre une position où son crochet (3a) est refermé sur le rebord intérieur (1b) de la première couronne (1) et une position basculée où ledit crochet (3a) est dégagé par rapport à la première couronne (1) et audit rebord.

7. Système selon l'une des revendications précédentes, dans lequel la première couronne (1) comprend une face d'appui inclinée par rapport au plan médian général de ladite couronne.

8. Système selon l'une des revendications précédentes comportant un tendeur (8) de câble.

9. Ensemble comportant deux sous-ensembles mécaniques et un système de séparation à actionneur pyrotechnique, dans lequel ledit système est un système selon l'une des revendications précédentes dont une première couronne (1) est solidaire de l'un des sous-ensembles mécaniques ou intégrée à celui-ci et dont une deuxième couronne (2) est solidaire de l'autre des sous-ensembles mécaniques ou intégrée à celui-ci.

10. Ensemble selon la revendication 9 dans lequel l'un des deux sous-ensembles comporte une charge utile, l'autre comportant des moyens de propulsion.

11. Ensemble selon la revendication 9 dans lequel les deux sous-ensembles sont des étages de propulsion.

12. Ensemble selon la revendication 9 dans lequel les deux sous-ensembles sont des charges utiles.
